# EUROPÄISCHE PATENTSCHRIFT

(11) **EP 1 072 302 B1**
(45) Veröffentlichungstag und Bekanntmachung des Hinweises auf die Patenterteilung: **27.12.2006**
(21) Anmeldenummer: 00111982.5
(22) Anmeldetag: 19.06.2000
(51) Int. Cl.: B01D 53/96, B01D 41/04, B01J 38/02, B01J 38/04

(54) **Verfahren und Vorrichtung zur Regeneration von Katalysatoren**
Method and apparatus for regenerating catalysts
Procédé et dispositif pour la regeneration de catalyseurs

(30) Priorität: 26.07.1999 CH 136999
(43) Veröffentlichungstag der Anmeldung: 31.01.2001
(73) Patentinhaber: Von Roll Umwelttechnik AG, 8005 Zürich (CH)
(72) Erfinder: Straub, Peter, 8143 Stallikon (CH); Flury, Rainer, 4702 Oensingen (CH); Frey, Ruedi, 8307 Effretikon (CH)
(74) Vertreter: Schaad, Balass, Menzl & Partner AG

(56) Entgegenhaltungen:
- WO-A-98/18540
- DE-A- 4 319 733
- DE-A- 19 541 918
- DE-A- 19 723 796
- US-A- 4 862 813

## Beschreibung

Die vorliegende Erfindung betrifft ein Verfahren und eine Vorrichtung nach dem Oberbegriff des Patentanspruchs 1 bzw. 7.

In verschiedenen Industriezweigen, so z.B. in Müllverbrennungsanlagen, fallen heisse Rauchgase an, die feste und gasförmige Stoffe wie Staub, Flugasche, Schwermetalle, Dioxine, Furane sowie SO₂, SO₃, NOₓ, CO, CHₓ enthalten.

Bei der thermischen Behandlung von Abfall werden die Rauchgase zur Rückgewinnung der Wärmeenergie in einem Kühlkessel auf eine Temperatur von ca. 220°-240°C abgekühlt. Vor dem Austritt in die Umgebung sind die Rauchgase unter Berücksichtigung gesetzlich festgelegter Grenzwerte von Schadstoffen zu befreien.

Für jeden Schadstoff wurden hochwirksame Reinigungsverfahren entwickelt, die allein oder in Kombination eingesetzt werden können. Zur Entfernung gasförmiger Schadstoffe werden Absorbentien und Adsorbentien bzw. Reagentien zugegeben, welche, wie auch die im Rauchgas enthaltenen festen Stoffe, ausgeschieden werden müssen. Die Ausscheidung dieser Stoffe erfolgt an einem Filter. Für die Reaktion der eingefügten Reagentien sind ferner Katalysatoren vorzusehen, die die Entfernung von Stickoxyden (sogenannte Entstickung) bewirken.

Die Feststoffe wurden bisher mittels Schlauchfiltern aus den gegebenenfalls mit Filterhilfsmitteln versehenen Rauchgasen ausfiltriert. Die Schlauchfilter, die nach dem Kühlkessel angeordnet waren und normalerweise bei 200°-220°C betrieben wurden, mussten öfters entfernt und gewaschen, wodurch entsprechende Funktionsunterbrüche der entsprechenden Filtereinheiten entstanden. Durch das Waschen gelangten ferner Giftstoffe ins Abwasser, das anschliessend gereinigt werden musste.

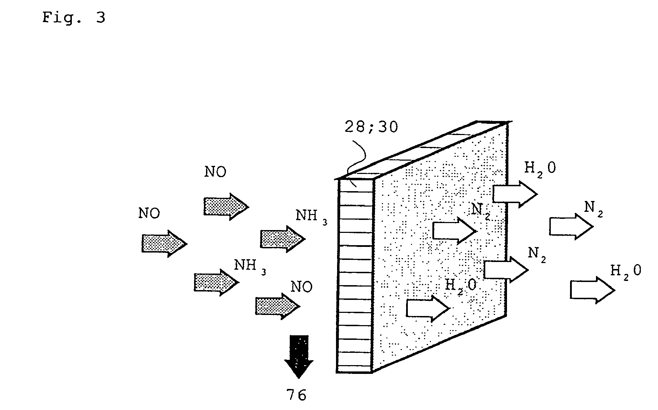

Insbesondere für Müllverbrennungsanlagen wurden nun katalytisch wirkende Filter bzw. Katalysatorfilter entwickelt, die, wie in Fig. 3 gezeigt, zur gleichzeitigen Entstaubung und Entstickung von Rauchgasen geeignet sind. Derartige Katalysatorfilter, die z.B. aus der DE-A1 36 34 360 bekannt sind, kombinieren die Vorteile bekannter Abscheidetechniken, vermeiden aber die damit verbundenen Probleme und reduzieren somit die Gesamtkosten der Gasreinigung beträchtlich. Das Katalysatorfilter, das als Hochleistungsfiltermedium für die Entstaubung und als Festkörperkatalysator für die Schadgasreinigung dient, weist vorzugsweise ein anorganisches, z.B. ein faserkeramisches Trägermaterial bestehend aus Al₂O₃, SiO₂ und/oder SiC auf, das in der Tiefe, vorzugsweise über den gesamten Querschnitt, mit katalytisch wirksamen Substanzen, wie V₂O₃/TiO₂ dotiert ist. Da durch die katalytische Wirkung des Filters nicht nur Stickoxyde, sondern auch Dioxine und Furane wirkungsvoll zerstört werden, entfällt zudem die Entsorgung dioxin- und furanhaltiger Kalk/Kohle-Gemische als Sondermüll.

Bei der Erprobung von Katalysatorfiltern wurde festgestellt, dass nach einer Betriebsdauer von mehreren Wochen nicht nur ein deutlich erhöhter Druckverlust über dem Filter, sondern auch eine deutliche Reduktion der Katalysatorleistung entsteht, woraus eine Abnahme von Gasdurchfluss und Entstickungsleistung (typische Reduktion von etwa 25% nach vier Wochen) resultiert.

Eine Regeneration der Katalysatorfilter durch Waschen erwies sich als ungenügend. Ferner entstanden bei diesem Reinigungsvorgang wiederum längere Funktionsunterbrüche der betreffenden Filtereinheiten sowie zu reinigendes Abwasser. Eine einfache und kostengünstige Lösung zur Regeneration der Katalysatorfilter bildet jedoch die Voraussetzung für deren industriellen Einsatz.

In DE 43 19 733 A1 wird ein Verfahren zur Regenerierung eines desaktivierten Katalysators beschrieben. Dazu wird der desaktivierte Katalysator in ein Behältnis gebracht, das bei erhöhter Temperatur von einem Trägergas durchströmt wird. Hierdurch sublimieren die auf dem Katalysator haftenden Schadstoffe, werden von dem Trägergas mitgeführt und desublimieren an der gekühlten Oberfläche.

Der vorliegenden Erfindung liegt daher die Aufgabe zugrunde, ein Verfahren und eine Vorrichtung anzugeben, durch die Katalysatorfilter hinsichtlich Filter- und Katalysewirkung innerhalb kurzer Zeit mit geringem Aufwand vollständig regeneriert werden können.

Die Lösung dieser Aufgabe gelingt anhand der im Anspruch 1 bzw. 8 angegebenen Massnahmen.

Überraschenderweise erlaubt das erfindungsgemässe Verfahren, das einfach und kostengünstig durchführbar ist, die rasche Wiederherstellung der mechanischen und katalytischen Filterwirkung des Katalysatorfilters durch simultane mechanische und thermische Behandlung.

Das Katalysatorfilter kann dabei direkt oder indirekt durch das zugeführte Schleppgas erwärmt werden. Bei der Zuführung erwärmten Schleppgases kann ohne zusätzlichen Aufwand eine gleichmässige Wärmeverteilung erzielt werden.

Besonders einfach kann der Regenerationsvorgang in einer vorzugsweisen Ausgestaltung der Erfindung mit einem Brenner realisiert werden, durch dessen Luftüberschuss das für die mechanische und thermische Behandlung verwendete Schleppgas gebildet wird.

Nach der erfindungsgemässen Regeneration ist der während dem vorgängigen Betrieb durch Ablagerungen entstandene zusätzliche Druckverlust über dem Katalysatorfilter wieder abgebaut. Gleichzeitig ist die katalytische Wirkung des Katalysatorfilters wieder hergestellt.

Katalysatorfilter, die für den erfindungsgemässen Regenerationsvorgang nicht ausgebaut werden müssen, können innerhalb von wenigen Stunden regeneriert werden, so dass nur kurze Funktionsunterbrüche entstehen. Das Regenerationsverfahren und die entsprechende Vorrichtung erlauben zudem die sequentielle Regeneration der Filtereinheiten, so dass die Anlage während dem Regenerationsvorgang ohne Unterbruch betrieben werden kann.

Insgesamt ergibt sich durch das erfindungsgemässe Verfahren und die Vorrichtung eine erhebliche Reduktion des Betriebsaufwandes.

Die Erfindung wird nachfolgend anhand einer Zeichnung beispielsweise erläutert. Dabei zeigt
- Fig. 1: eine zur erfindungsgemässen Regeneration von Katalysatorfiltern geeignete Vorrichtung 10 in einer bevorzugten Ausgestaltung mit zwei Filterelementen und zwei Reingaskammern,
- Fig. 2: eine weitere zur erfindungsgemässen Regeneration von Katalysatorfiltern geeignete Vorrichtung 100, und
- Fig. 3: die schematische Darstellung der Wirkung eines Katalysatorfilters.

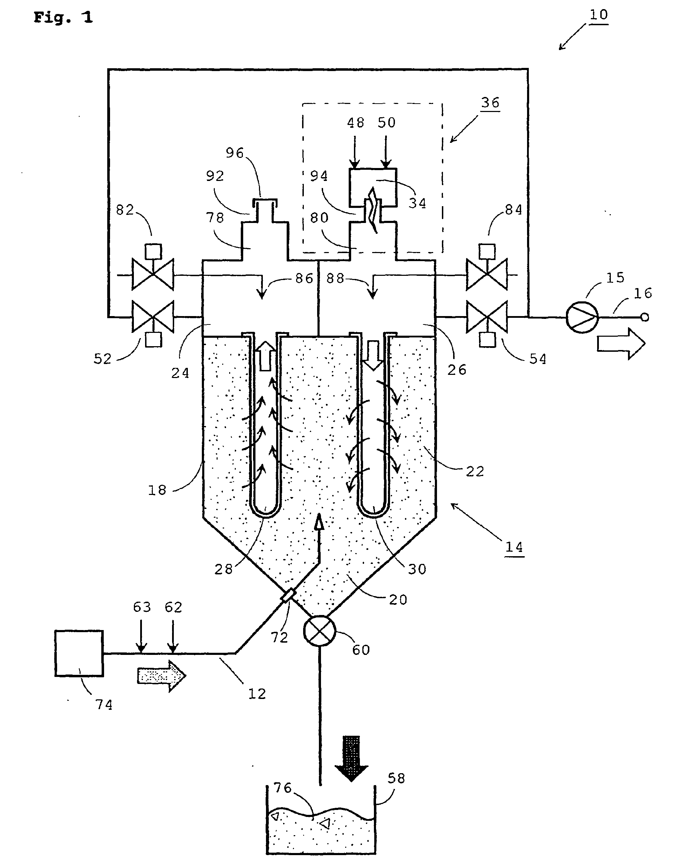

Fig. 1 zeigt in schematischer Darstellung eine erfindungsgemässe Vorrichtung 10, der das zu reinigende Rauchgas z.B. von dem dem Verbrennungsofen nachgeschalteten Kühlkessel 74 einer Müllverbrennungsanlage zugeführt wird. Die Rauchgase, die feste und gasförmige Stoffe wie Staub, Flugasche, Schwermetalle, Dioxine, Furane sowie SO₂,SO₃, NOₓ, CO, CHₓ enthalten, werden über eine Rauchgasleitung 12 einer Reinigungsvorrichtung 14 zugeführt, in der die genannten festen und gasförmigen Stoffe anhand von eingangs beschriebenen Katalysatorfiltern 28, 30 ausfiltriert bzw. in umweltverträgliche Gase umgewandelt werden. Die so gereinigten Rauchgase werden über eine Reingasleitung 16 einer weiteren Behandlung zuführt.

Die Reinigungsvorrichtung 14 umfasst ein in der beispielsweise gezeigten Ausgestaltung aus einem kegelförmigen unteren und zylinderförmigen oberen Gehäuseabschnitt 20 bzw. 22 bestehendes Filtergehäuse 18, das auf der Unterseite eine mit der Rauchgasleitung 12 verbundene Eintrittsöffnung 72 und auf der Oberseite Austrittsöffnungen aufweist, in die kerzenförmige Katalysatorfilter 28, 30 eingefügt sind, die, wie eingangs beschrieben, zur gleichzeitigen Entstaubung und Entstickung von Rauchgasen geeignet sind.

Aus Fig. 3 ist ersichtlich, dass durch ein Filterelement 28; 30 im Rauchgas enthaltener Staub 76 abgetrennt und NO-, NH₃-Komponenten in N₂ sowie H₂O umgewandelt werden.

Das gereinigte Rauchgas wird vorzugsweise mittels einem Saugzuggebläse 15 von den Katalysatorfilter 28; 30 je über eine abgeschlossene Reingaskammer 24; 26 sowie ein Sperrventil 52; 54 zur Reingasleitung 16 gefördert.

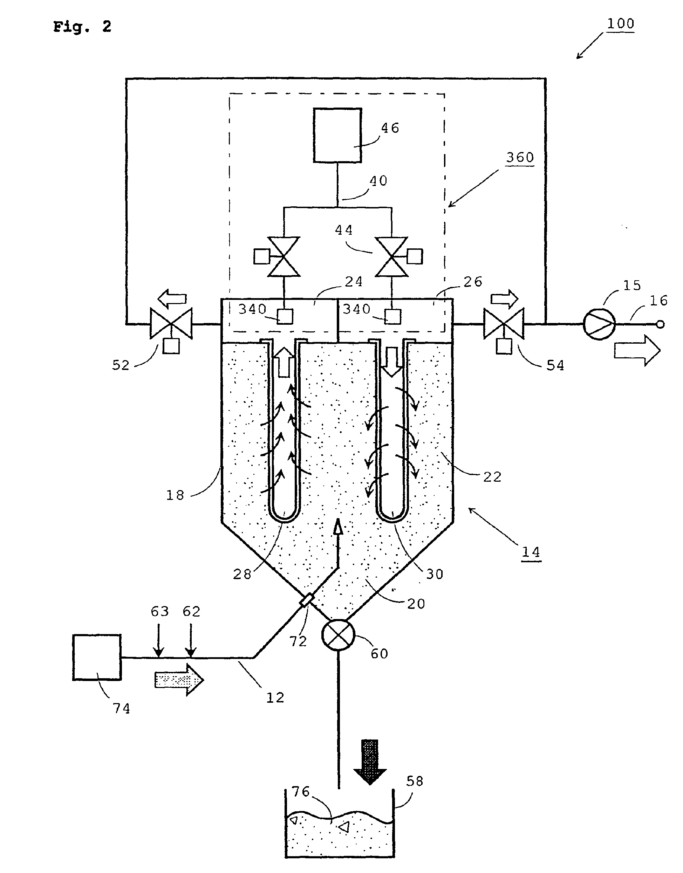

Zur besseren Übersicht sind in Fig. 1 (und Fig. 2) nur zwei Katalysatorfilter 28, 30 und zwei Reingaskammern 24, 26 gezeigt. Im Normalfall werden jedoch oft mehr als hundert Katalysatorfilter und mehrere Reingaskammern verwendet.

Eine der in Fig. 1 gezeigten Reingaskammern 24; 26 ist ferner mit einer Regenerationsvorrichtung 36 verbunden, die zur Durchführung des Regenerationsvorganges dient.

Ein Vergleich der in Fig. 1 und Fig. 2 dargestellten Vorrichtungen 10 und 100 zeigt, dass diese sich nur durch die darin verwendeten Regenerationsvorrichtungen 36; 360 unterscheiden.

Besonders vorteilhaft kann das zur Erwärmung des Katalysatorfilters 28; 30 dienende Schleppgas, wie bei der in Fig. 1 gezeigten Regenerationsvorrichtung 36, durch den Luftüberschuss eines Gasbrenners 34 gebildet werden. Dazu ist jede Reingaskammer 24; 26 mit einer Brennkammer 78; 80 versehen, an die der Gasbrenner 34 über einen Stutzen 92; 94 aufsetzbar ist. Der Gasbrenner 34 wird mit einem Brenngas 48, z.B. Propan, sowie einem hohen Überschuss an Brennerluft 50 betrieben. Die so erzeugten heissen Schleppgase werden durch den im Filtergehäuse 18 herrschenden Unterdruck (etwa minus 30 mbar), entgegen der normalen Strömungsrichtung der Rauchgase, in das Innere des Filtergehäuses 18 gesaugt. Die Zuführung der erhitzten Schleppgase zu den Reingaskammern 24, 26 kann auch aus einer Brennkammer mit einer Verteilleitung und entsprechenden Klappen erfolgen. Für den Normalbetrieb wird der Stutzen 92; 94 mit einem Deckel 96 abgeschlossen.

Die Erzeugung heissen Schleppgases ist jedoch auch mit der in Fig. 2 gezeigten Regenerationsvorrichtung 360 möglich. Dazu wird von einer Gasversorgungseinheit 46 über eine Versorgungsleitung 40 und ein Sperrventil 44 Schleppgas in die zugehörige Reingaskammer 26 eingeführt, das dort durch eine Heizvorrichtung 340 erhitzt und anschliessend in das Katalysatorfilter 30 eingesaugt wird. Die Heizvorrichtung 340 ist vorzugsweise ein durch Dampf oder elektrischen Strom erwärmbares Heizelement. Möglich ist ferner die Verwendung von Mikrowellenstrahlern, die, statt des Schleppgases, die Katalysatorfilter 28, 30 direkt erhitzen. Die Anordnung der Heizelemente 340 ausserhalb der Reingaskammern 24; 26 ist ebenfalls möglich.

Der im Filtergehäuse 18 anfallende Filterstaub 76 ist über eine Austragvorrichtung 60, z.B. eine Zellradschleuse oder Schnecke) einem Filterstaubbehälter 58 zuführbar.

Nachfolgend wird die Funktionsweise der Reinigungsvorrichtung 14 sowie das erfindungsgemässe Verfahren und die Vorrichtung 10; 100 näher erläutert.

Die vom Verbrennungsofen der Müllverbrennungsanlage erzeugten Rauchgase werden nach der Abkühlung im Kühlkessel 74 durch die Rauchgasleitung 12 in die Rauchgasreinigungsanlage 10; 100 eingeleitet. Zur Reduktion der im Rauchgas enthaltenen Stickoxide wird über die Leitung 63 Ammoniak in den Rauchgasstrom in einer Dosis eingeleitet, die auf Grundlage aktuell gemessener Stickoxid-Werte ermittelt worden ist. Wird eine zusätzliche Absorption von sauren Schadgasen wie HCl, HF, SO₂ gewünscht, kann über die Leitung 62 zusätzlich ein trockenes Additiv (z.B. Calziumhydroxid oder andere Alkali- oder Erdalkalioxide, -hydroxide, -carbonate oder hydrogencarbonate) eingedüst werden. Das vorzugsweise derart vorbehandelte Rauchgas wird mittels dem obenerwähnten Saugzuggebläse 15 der Eintrittsöffnung 72 des Filtergehäuses 18 zugeführt und durchströmt darin die Katalysatorfilter 28 und 30. Von den Katalysatorfiltern 28 und 30 wird der im Rauchgas enthaltene Staub 76 (siehe Fig. 3) gefiltert, während gleichzeitig die im Rauchgas enthaltenen Stickoxide, Kohlenmonoxide und Kohlenwasserstoffe durch die katalytisch wirksamen Schichten der Katalysatorfilter 28 und 30 in Stickstoff, Wasserdampf und Kohlendioxid umgewandelt werden. Das so gefilterte und gereinigte Rauchgas wird von den Katalysatorfiltern 28 und 30 je über die voneinander getrennten Reingaskammern 24; 26 durch das Saugzuggebläse 15 in die Reingasleitung 16 gefördert.

Bei der Erprobung von Katalysatorfiltern 28, 30 wurde festgestellt, dass nach einer Betriebsdauer von mehreren Wochen nicht nur ein deutlich erhöhter Druckverlust über dem Filter, sondern auch eine deutliche Reduktion der Katalysatorleistung entsteht, woraus eine Abnahme von Gasdurchfluss und Entstickungsleistung (typische Reduktion von etwa 25% nach vier Wochen) resultiert.

Bekannt ist, dass in den Poren der Katalysatorfilter 28, 30 auskondensierende Substanzen, wie beispielsweise Ammoniumsalze und Schwermetallsalze, zu einer Verkleinerung des Strömungsquerschnittes und damit zu einer Zunahme des Druckverlustes über den Katalysatorfiltern 28 und 30 führen, so dass der Rauchgasdurchfluss stark behindert wird (um diesem Vorgang entgegen zu wirken, wird der Rauchdurchfluss durch entsprechende Erhöhung der Leistung des Saugzuggebläses 15 vorzugsweise konstant gehalten). Gleichzeitig reduziert sich die katalytische Wirkung der Katalysatorfilter 28 und 30, was zumindest teilweise auf Oberflächenablagerungen auf katalytisch wirksamen Schichten zurück zu führen ist.

Sobald der Leistungsabfall der Katalysatorfilter 28 und 30 (z.B. Reduktion der Entstickungsleistung, reduzierter Rauchgasdurchfluss bzw. erhöhter Druckverlust) einen vorgesehenen Wert überschritten hat, werden die Katalysatorfilter 28, 30 unter Anwendung des erfindungsgemässen Verfahrens anhand der Regenerationsvorrichtung 36; 360 regeneriert.

Nach dem erfindungsgemässen Verfahren wird ein zu regenerierendes Katalysatorfilter 28, 30 auf eine Temperatur erwärmt, die über dessen Betriebstemperatur liegt. Gleichzeitig wird dem Katalysatorfilter 28; 30 ein Schleppgas zugeführt, so dass das Katalysatorfilter 28; 30 durch gleichzeitige thermische und mechanische Behandlung regeneriert wird.

Durch die Temperaturbehandlung wird die katalytische Wirksamkeit des Katalysatorfilters 28; 30 wieder erstellt. Gleichzeitig werden die an der Filteroberfläche anhaftenden Substanzen (sogenannter Filterkuchen) teilweise sublimiert und durch das Schleppgas mechanisch vom Katalysatorfilter 28; 30 abgelöst und weggeführt.

Das mechanische Ablösen der am Katalysatorfilter 28; 30 anhaftenden Substanzen wird dabei bevorzugt durch Druckluft- bzw. Druckgasstösse unterstützt, die dem Schleppgas gegebenenfalls durch stossweise Zufuhr eines weiteren gasförmigen Mediums überlagert werden. In der Vorrichtung von Fig. 1 sind dazu Druckluftlanzen 86, 88 vorgesehen, über die durch kurzzeitige Öffnung der zugehörigen Ventile 82, 84 Druckluftstösse an die Katalysatorfilter 28; 30 abgegeben werden. Typischerweise werden alle 5-10 Minuten Druckluftstösse abgegeben, die eine Impulsdauer von etwa 25-100 ms aufweisen. Die Druckluftstösse werden vorzugsweise auch im Normalbetrieb regelmässig angewendet.

Abgelöste Partikel werden sodann mit dem Rauchgasstrom dem zweiten Katalysatorfilter 28 (siehe Fig. 1, 2) zugeführt oder fallen auf den Boden des Filtergehäuses 18, wo sie über die Austragvorrichtung 60 dem Filterstaubbehälter 58 zugeführt werden.

Wie in Fig. 1 und 2 gezeigt, verläuft die Strömungsrichtung des Schleppgases vorzugsweise entgegengesetzt zur Strömungsrichtung des Rauchgases. Dadurch lassen sich die anhaftenden Substanzen leichter vom Katalysatorfilter 28; 30 ablösen und zurück in das zu reinigende Rauchgas überführen.

Die Temperatur, auf die das Katalysatorfilter 28; 30 während dem Regenerationsvorgang erwärmt wird, liegt, wie bereits erwähnt, über dessen Betriebstemperatur. Da sich die temperaturabhängigen Verläufe der Reduktionsgrade von Katalysatorfiltern 28; 30 für verschiedene Gase, wie CO, C₃H₈, NO voneinander unterscheiden, werden die Betriebstemperaturen von den Anwendern nach Bedarf festgelegt. Es hat sich gezeigt, dass es besonders vorteilhaft ist, Regenerationstemperaturen zu wählen, die 50°C-200°C über der Betriebstemperatur der Katalysatorfilter 28; 30 liegen.

Bei einer Betriebstemperatur eines Katalysatorfilters 28; 30 im Bereich von 200°C bis 250°C wird für einen Regenerationsvorgang, der je nach Verunreinigung etwa eine bis vier Stunden dauert, z.B. eine Regenerationstemperatur von 300°C bis 400°C gewählt. Durch die Anwendung höherer Temperaturen kann der Regenerationsvorgang grundsätzlich verkürzt werden. Die Regenerationstemperatur wird jedoch bevorzugt unterhalb des Bereichs gewählt, bei dem Beschädigungen des Katalysatorfilters 28; 30 auftreten können.

Die Regeneration erfolgt bevorzugt mit einem Gasstrom von ca. 50 m³/h bezogen auf eine Filteroberfläche von 1 m². Während dem Regenerationsvorgang wird die Verbindung zwischen der von Schleppgas durchströmten Reingaskammer 24; 26 und der Reingasleitung 16 unterbrochen, damit kein Schleppgas direkt in die Reingasleitung 16 entweicht. Wie in Fig. 1 und 2 gezeigt, wird das Schleppgas mittels dem Saugzuggebläse 15 über das zu regenerierende Katalysatorfilter 30 in das Filtergehäuse 18 und von dort über das im Normalbetrieb befindliche Katalysatorfilter 28 zur Reingasleitung 16 gesaugt. Die anschliessende Regeneration des zweiten Katalysatorfilters 28 erfolgt in gleicher Weise.

Durch das erfindungsgemässe Verfahren können Katalysatorfilter 28; 30 mit geringem Aufwand und somit kostengünstig regeneriert werden. Der störende Druckverlust über dem Katalysatorfilter 28; 30 sowie die entstandene Reduktion der katalytischen Wirkung werden mit einfachen Mitteln beseitigt. Die angegebene Vorrichtung ist zur Durchführung des Verfahrens besonders gut geeignet.

Die Erfindung ist zur Regenerierung von Katalysatorfiltern anwendbar, die zur Reinigung von Gasen vorgesehen sind, die feststoffliche und/oder gasförmige Verunreinigungen enthalten. Diese verunreinigten Gase, die einfachheitshalber als Rauchgase bezeichnet werden, können beliebige Abgase umfassen.

### Bezugszeichenliste

- 10; 100: Rauchgasreinigungsanlage
- 12: Rauchgasleitung
- 14: Reinigungsvorrichtung
- 15: Saugzuggebläse
- 16: Reingasleitung
- 18: Filtergehäuse
- 20: unterer Gehäuseabschnitt
- 22: oberer Gehäuseabschnitt
- 24; 26: Reingaskammern
- 28; 30: Katalysatorfilter
- 34; 340: Heizvorrichtungen (Gasbrenner)
- 36; 360: Regenerationsvorrichtungen (Fig. 1; Fig. 2)
- 40: Versorgungsleitung
- 44: Sperrventil
- 46: Gasversorgungseinheit
- 48: Brenngas (z.B. Propan)
- 50: Brennerluft
- 52; 54: Sperrventil
- 58: Filterstaubbehälter
- 60: Austragvorrichtung für Staub
- 62: Zudosierung fester Additive
- 63: Zudosierung von Ammoniak
- 72: Eintrittsöffnung
- 74: Kühlkessel
- 76: Staub
- 78; 80: Brennkammern
- 82; 84: Ventile für Druckluftlanzen
- 86; 88: Druckluftlanzen
- 92; 94: Brennkammerstutzen
- 96: abnehmbarer Deckel für Stutzen

## Patentansprüche

1. Verfahren zur Regeneration eines insbesondere in Müllverbrennungsanlagen zur Reinigung von Rauchgasen dienenden Katalysatorfilters (28, 30), welches zur mechanischen Abtrennung von Feststoffen sowie zur Reinigung bzw. Umwandlung von gasförmigen Verunreinigungen geeignet ist, **dadurch gekennzeichnet, dass** das Katalysatorfilter (28, 30), as während der Regeneration nicht ausgebaut werden muss auf eine Temperatur erwärmt wird, die über dessen Betriebstemperatur liegt und dass dem Katalysatorfilter (28, 30) gleichzeitig ein Schleppgas zugeführt wird, so dass das Katalysatorfilter (28, 30) durch gleichzeitige thermische und mechanische Behandlung regeneriert wird, und
das Katalysatorfilter (28, 30) durch einen Wärmestrahler oder ein durch Dampf oder elektrischen Strom erwärmbares Heizelement (340) direkt oder indirekt durch gegebenenfalls aus Dampf oder Luft bestehendes heisses Schleppgas erwärmt wird.

2. Verfahren nach Anspruch 1, **dadurch gekennzeichnet, dass** das Katalysatorfilter (28, 30) auf eine Temperatur erwärmt wird, die 50°C bis 200°C über der Betriebstemperatur und/oder die unterhalb der Temperatur liegt, bei der eine Beschädigung des Katalysatorfilters (28, 30) auftreten kann.

3. Verfahren nach Anspruch 2, **dadurch gekennzeichnet, dass** das Schleppgas durch den Luftüberschuss eines Brenners (34) gebildet wird.

4. Verfahren nach Anspruch 1, 2 oder 3, **dadurch gekennzeichnet, dass** das Schleppgas von der Reingasseite her durch das Katalysatorfilter (28, 30) hindurchgeführt wird.

5. Verfahren nach einem der vorhergehenden Ansprüche, **dadurch gekennzeichnet, dass** dem Schleppgas Druckimpulse überlagert werden, die durch eine Änderung des Schleppgasflusses oder durch stossweise Zufuhr eines weiteren gasförmigen Mediums bewirkt werden.

6. Verfahren nach einem der vorhergehenden Ansprüche für eine Anlage mit mehreren Katalysatorfiltern (28, 30), **dadurch gekennzeichnet, dass** der Regenerationsvorgang für einen Teil der Katalysatorfilter (28; 30) durchgeführt wird, währenddem sich weitere Katalysatorfilter (30; 28) im Normalbetrieb befinden.

7. Vorrichtung insbesondere für Müllverbrennungsanlagen zur Durchführung des Verfahrens nach Anspruch 1 mit wenigstens einem zur Reinigung von Rauchgas dienenden Katalysatorfilter (28; 30), das in einem Filtergehäuse (18) angeordnet ist, in das über eine Eintrittsöffnung (72) Rauchgas zuführbar ist, das nach dem Durchlaufen des Katalysatorfilters (28; 30) einer Reingasleitung (16) zuführbar ist, **dadurch gekennzeichnet, dass** dem Katalysatorfilter (28, 30) zu dessen Regenerierung ein Schleppgas zuführbar ist und dass wenigstens eine Heizvorrichtung (34; 340) vorgesehen ist, durch die das Katalysatorfilter (28; 30) direkt oder mittels dem Schleppgas indirekt auf eine Temperatur erwärmbar ist, die über der Betriebstemperatur des Katalysatorfilters (28, 30) liegt.

8. Vorrichtung nach Anspruch 7, **dadurch gekennzeichnet, dass** jedem einzelnen oder Gruppen von Katalysatorfiltern (28, 30) eine abgeschlossene Reingaskammer (24; 26) zugeordnet ist, über die während dem Regenerationsvorgang das Schleppgas den Katalysatorfiltern (28, 30) und während dem Normalbetrieb das von den Katalysatorfiltern (28, 30) gereinigte Rauchgas der Reingasleitung (16) zuführbar ist.

9. Vorrichtung nach Anspruch 8, **dadurch gekennzeichnet, dass** das Heizgerät (340) ein mit Brenngas (48) und einem Überschuss an Brennerluft (50) betriebener Gasbrenner ist, von dem das erzeugte Schleppgas über eine Brennkammer (78; 80) der Reingaskammer zuführbar ist.

10. Vorrichtung nach Anspruch 8, **dadurch gekennzeichnet, dass** die Heizvorrichtung (340) ein Wärmestrahler, ein durch Dampf oder elektrischen Strom erwärmbares Heizelement ist, durch das das von einer Gasversorgungseinheit (46) abgegebene Schleppgas erwärmbar ist oder dass die Heizvorrichtung (340) ein Mikrowellenstrahler ist, durch den die zu regenerierenden Katalysatorfilter (28, 30) direkt erwärmbar sind.

11. Vorrichtung nach einem der Ansprüche 7 bis 10, **dadurch gekennzeichnet, dass** Sperrventile (44; 82, 84) vorgesehen sind, die derart steuerbar sind, dass dem Schleppgas durch eine Änderung der Schleppgaszufuhr oder durch stossweise Zufuhr eines weiteren gasförmigen Mediums Druckimpulse überlagert werden können.

12. Vorrichtung nach einem der Ansprüche 7 - 11, **dadurch gekennzeichnet, dass** das Katalysatorfilter (28; 30) aus einem anorganischem, gegebenenfalls aus einem keramischen Material besteht.

13. Vorrichtung nach einem der Ansprüche 7 - 12, **dadurch gekennzeichnet, dass** ein Kessel (74) vorgesehen ist, in dem das Rauchgas gekühlt wird, bevor es dem Filtergehäuse (18) zugeführt wird.

## Claims

1. Method for regenerating a catalytic filter (28, 30) which is used in particular in refuse incineration plants for cleaning flue gases and is suitable for mechanically separating out solids and for cleaning or converting gaseous contaminants, **characterized in that** the catalytic filter (28, 30), which need not be removed during the regeneration, is heated to a temperature which is above its operating temperature, and **in that** at the same time a carrier gas is fed to the catalytic filter (28, 30), so that the catalytic filter (28, 30) is regenerated by simultaneous thermal and mechanical treatment, the catalytic filter (28, 30) is heated by a heat radiator or a heater element (340), which can be heated by steam or electric current, directly or indirectly by hot carrier gas which may consist of steam or air.

2. Method according to Claim 1, **characterized in that** the catalytic filter (28, 30) is heated to a temperature which is 50°C to 200°C above the operating temperature and/or is below the temperature at which damage to the catalytic filter (28, 30) can occur.

3. Method according to Claim 2, **characterized in that** the carrier gas is formed by the excess air from a burner (34).

4. Method according to Claim 1, 2 or 3, **characterized in that** the carrier gas is passed through the catalytic filter (28, 30) from the clean gas side.

5. Method according to one of the preceding claims, **characterized in that** pressure pulses which are brought about by changing the flow of carrier gas or by feeding a further gaseous medium at intervals are superimposed on the carrier gas.

6. Method according to one of the preceding claims for a plant with a plurality of catalytic filters (28, 30), **characterized in that** the regeneration operation is carried out for some of the catalytic filters (28; 30) while other catalytic filters (30; 28) are operating normally.

7. Apparatus, in particular for refuse incineration plants, for carrying out the method according to Claim 1, having at least one catalytic filter (28; 30), which is used for cleaning flue gas and is arranged in a filter housing (18) into which flue gas can be fed via an inlet opening (72), which gas, after it has passed through the catalytic filter (28; 30), can be fed to a clean gas line (16), **characterized in that**, in order to regenerate the catalytic filter (28, 30), the latter can be fed with a carrier gas, and **in that** at least one heater appliance (34; 340) is provided, by means of which the catalytic filter (28; 30) can be heated directly or, by means of the carrier gas, indirectly to a temperature which is above the operating temperature of the catalytic filter (28, 30).

8. Apparatus according to Claim 7, **characterized in that** each individual catalytic filter (28, 30) or groups of catalytic filters (28, 30) is/are assigned a closed clean gas chamber (24; 26), via which, during the regeneration operation, the carrier gas can be fed to the catalytic filters (28, 30) and, during normal operation, the flue gas which has been cleaned by the catalytic filters (28, 30) can be fed to the clean gas line (16).

9. Apparatus according to Claim 8, **characterized in that** the heater appliance (340) is a gas burner which is operated with fuel gas (48) and an excess of burner air (50) and by which the carrier gas generated can be fed via a combustion chamber (78; 80) to the clean gas chamber.

10. Apparatus according to Claim 8, **characterized in that** the heater appliance (340) is a heat radiator, a heater element which can be heated by steam or electric current and by means of which the carrier gas released from a gas supply unit (46) can be heated, or in that the heater appliance (340) is a microwave radiator, by means of which the catalytic filters (28, 30) to be regenerated can be heated directly.

11. Apparatus according to one of Claims 7 to 10, **characterized in that** locking valves (44; 82, 84) are provided, which can be controlled in such a manner that, by changing the carrier gas feed or by feeding a further gaseous medium at intervals, pressure pulses can be superimposed on the carrier gas.

12. Apparatus according to one of Claims 7-11, **characterized in that** the catalytic filter (28; 30) consists of an inorganic, if appropriate a ceramic, material.

13. Apparatus according to one of Claims 7-12, **characterized in that** a boiler (74) is provided, in which the flue gas is cooled before it is fed to the filter housing (18).

## Revendications

1. Procédé de régénération d'un filtre catalytique (28, 30) servant en particulier dans des incinérateurs à l'épuration de produits de combustion, adapté à la séparation mécanique de solides, ainsi qu'à l'épuration ou à la conversion de polluants gazeux, **caractérisé en ce que** le filtre catalytique (28, 30), qu'il n'est pas nécessaire de démonter pendant la régénération, est chauffé à une température supérieure à sa température de service, et **en ce que** le filtre catalytique (28, 30) est simultanément alimenté en un gaz vecteur, de sorte que le filtre catalytique (28, 30) est régénéré par traitement thermique et mécanique simultané et que le filtre catalytique (28, 30) est chauffé directement par un radiateur ou par un corps de chauffe (340) pouvant être chauffé à la vapeur ou au courant électrique, ou indirectement par du gaz vecteur chaud éventuellement composé de vapeur ou d'air.

2. Procédé suivant la revendication 1, **caractérisé en ce que** le filtre catalytique (28, 30) est chauffé à une température supérieure de 50° C à 200° C à la température de service et/ou inférieure à la température à laquelle peut survenir une détérioration du filtre catalytique (28, 30).

3. Procédé suivant la revendication 2, **caractérisé en ce que** le gaz vecteur est formé par l'excès d'air d'un brûleur (34).

4. Procédé suivant la revendication 1, 2 ou 3,
**caractérisé en ce que** le gaz vecteur est envoyé au travers du filtre catalytique (28, 30) à partir du côté gaz épuré.

5. Procédé suivant l'une des revendications précédentes, **caractérisé en ce que** des impulsions de pression, provoquées par une modification du flux de gaz vecteur ou par une alimentation intermittente en un autre fluide gazeux, sont superposées au gaz vecteur.

6. Procédé suivant l'une des revendications précédentes pour une installation avec plusieurs filtres catalytiques (28, 30), **caractérisé en ce que** l'opération de régénération est réalisée pour une partie des filtres catalytiques (28 ; 30), tandis que d'autres filtres catalytiques (30 ; 28) se situent en service normal.

7. Dispositif en particulier pour des incinérateurs pour la mise en oeuvre du procédé suivant la revendication 1, comprenant au moins un filtre catalytique (28 ; 30) servant à l'épuration de produits de combustion et disposé dans un boîtier filtrant (18), qui peut être alimenté par l'intermédiaire d'une ouverture d'admission (72) en produits de combustion pouvant être envoyés dans une conduite de gaz épurés (16) après leur passage au travers du filtre catalytique (28 ; 30), **caractérisé en ce que** le filtre catalytique (28, 30) peut être alimenté en un gaz vecteur pour sa régénération, et **en ce qu'**est prévu au moins un dispositif de chauffage (34 ; 340), par lequel le filtre catalytique (28 ; 30) peut être chauffé directement ou indirectement au moyen du gaz vecteur à une température supérieure à la température de service du filtre catalytique (28, 30).

8. Dispositif suivant la revendication 7, **caractérisé en ce qu'**un compartiment de gaz épuré séparé (24 ; 26) est associé à chaque filtre catalytique individuel ou à des groupes de filtres catalytiques (28, 30), compartiment par l'intermédiaire duquel le gaz vecteur peut être envoyé aux filtres catalytiques (28, 30) pendant l'opération de régénération, et les produits de combustion épurés par les filtres catalytiques (28, 30) peuvent être envoyés à la conduite de gaz épurés (16) pendant le service normal.

9. Procédé suivant la revendication 8, **caractérisé en ce que** l'appareil de chauffage (340) est un brûleur à gaz exploité avec un combustible gazeux (48) et un excès d'air (50) du brûleur, par lequel le gaz vecteur produit peut être envoyé au compartiment de gaz épurés par l'intermédiaire d'une chambre de combustion (78 ; 80).

10. Procédé suivant la revendication 8, **caractérisé en ce que** le dispositif de chauffage (340) est un radiateur, un corps de chauffe pouvant être chauffé à la vapeur ou au courant électrique, par lequel peut être chauffé le gaz vecteur cédé par une unité d'alimentation en gaz (46), ou **en ce que** le dispositif de chauffage (340) est un radiateur à micro-ondes, par lequel les filtres catalytiques (28, 30) à régénérer peuvent être chauffés directement.

11. Procédé suivant l'une des revendications 7 à 10, **caractérisé en ce que** sont prévus des clapets anti-retour (44 ; 82, 84) qui peuvent être commandés de sorte que des impulsions de pression peuvent être superposées au gaz vecteur par une modification de l'alimentation en gaz vecteur ou par une alimentation intermittente en un autre fluide gazeux.

12. Procédé suivant l'une des revendications 7 à 11, **caractérisé en ce que** le filtre catalytique se compose d'un matériau minéral, éventuellement d'un matériau céramique.

13. Procédé suivant l'une des revendications 7 à 12, **caractérisé en ce qu'**est prévue une chaudière (74), dans laquelle sont refroidis les produits de combustion avant leur envoi dans le boîtier filtrant (18).
